# EUROPÄISCHE PATENTSCHRIFT

(11) **EP 2 875 900 B1**
(45) Veröffentlichungstag und Bekanntmachung des Hinweises auf die Patenterteilung: **31.05.2017**
(21) Anmeldenummer: 14003662.5
(22) Anmeldetag: 29.10.2014
(51) Int. Cl.: B24D 9/08, F15B 20/00

(54) **Schleifteller**
Grinding plate
Plateau de meule

(30) Priorität: 21.11.2013 DE 202013010480 U
(43) Veröffentlichungstag der Anmeldung: 27.05.2015
(73) Patentinhaber: Kolthoff Gabrovo EOOD, 5300 Gabrovo (BG)
(72) Erfinder: Kolthoff, Dieter, 6454 Flüelen (CH)
(74) Vertreter: Deters, Frank

(56) Entgegenhaltungen:
- EP-A2- 2 366 498
- EP-A2- 2 607 018
- DE-A1- 10 357 144
- US-A- 3 333 371

## Beschreibung

Zur Oberflächenfeinbearbeitung verschiedenster Produkte durch Schleifen, Polieren u. dgl. werden häufig Schleifteller eingesetzt, die von einer meistens handgeführten Antriebsmaschine über einen regelmäßig standardisierten Antriebsanschluss in einer konzentrisch oder exzentrisch rotierenden oder auch alternierenden Bewegung angetrieben werden und an denen unterseitig das passende Arbeitsmittel an einer vorzugsweise ebenen Unterfläche angeordnet ist. Das Arbeitsmittel kann dabei fest auf der unterseitigen Auflagefläche des Schleiftellers angebracht sein, es kann aber auch wie z.B. ein Schleifblatt auswechselbar sein, indem es lösbar über eine klebende oder mit einem Klettbelag versehene Zwischenschicht haftend angebracht wird oder aber an zumindest einem Klemmbereich festgeklemmt wird.

Wesentlicher Teil eines solchen Schleiftellers ist in jedem Fall ein elastisch verformbares Kissen für einen vergleichmäßigten Andruck der Auflagefläche, welches herkömmlich vor allem aus geschäumtem elastomeren Kunststoffmaterial hergestellt wurde. Ein solches weichelastisches Material wurde dann regelmäßig durch eine oberseitige Stützplatte stabilisiert, mit der bei Schleiftellern mit Absaugzügen auch Luftführungskanäle eingearbeitet sind. Beispiele dieser Art finden sich in der EP 2 607 018 A2 oder in der EP 2 366 498 A2.

Nachteilig an der Verarbeitung geschäumter Formteile aus elastomerem Kunststoff ist zum einen die Verarbeitungszeit zum Aufschäumen und Aushärten, die insbesondere im Hinblick auf einen bedarfsgerechten hohen Produktionsausstoß bremsend wirkt, wie auch die schwierige Verbindung zum Kissen und zur Stützplatte im Hinblick auf die äußerst verschiedenen Materialeigenschaften.

Aus der DE 103 57 144 A1 ist demgegenüber ein Schleifteller nach dem Oberbegriff des Anspruchs 1 zu ersehen, bei dem ein Kissen ohne einen Aufschäumvorgang im Spritzgussverfahren durch eine Formgestaltung mit zumindest einseitig offenen Kammerstrukturen in der erforderlichen Weise weich-nachgiebig gestaltet wird. Ein solches Spritzgussverfahren erlaubt sehr viel höhere Taktzeiten in der Herstellung. Ein Übergang zu teilweise steiferen Rückhaltestrukturen kann dabei in einem ZweiKomponenten-Spritzgussverfahren gestaltet werden, bei dem die der weicheren Auflagefläche des Kissens gegenüberliegenden oberen Bereiche mit einem zweiten festeren Material ausgeführt werden. Diese Möglichkeit ist allerdings auf sehr begrenzte Materialkombinationen eingeschränkt und in der Versteifungswirkung beschränkt. Dabei ist in Kauf zu nehmen, dass die oberseitig offenen Kammerstrukturen verschmutzungsanfällig offen bleiben. Für die Praxis unvorteilhaft ist auch, dass nach diesem Stand der Technik eine Stützplatte als Flansch eines Antriebsanschlusses vorzusehen ist, der mit mehreren Verschraubungen an dem Kissen festzulegen ist. Dies schränkt die mechanischen Eigenschaften des Schleiftellers ein und bedingt auch einen erheblichen Montageaufwand.

Aufgabe der Erfindung ist es hiernach, einen Schleifteller dahingehend weiterzuentwickeln, dass er mit verringertem Arbeitsaufwand und kurzer Fertigungszeit preiswert und einfach herzustellen ist. Aufgabe der Erfindung ist es auch, das Herstellungsverfahren für einen solchen Schleifteller im Sinne eines erheblichem Verschleißes im Gebrauch unterliegenden Massenprodukts einfacher, schneller und insgesamt preisgünstiger zu gestalten.

Die Aufgabenstellung wird mit einem Schleifteller nach dem Anspruch 1 gelöst, der für die Herstellung des elastisch verformbaren Kissens die vorteilhafte Spritzgussfertigung nutzt, diese aber so zur Vereinfachung des Schleiftellers mit Einsparen von Verbindungselementen wie auch zur schnellen und soliden Verankerung der Stützplatte oder deren angrenzende Teile vorsieht, dass diese in das Kissen eingebettet werden. Dieses ermöglicht es, die einzubettenden Teile vor dem Spritzguss in das Spritzgusswerkzeug einzubringen und dann in einem Zuge der Formgebung einzubinden. Die für ein Spritzgussverfahren in Betracht zu ziehenden Materialien sind vorzugsweise im Bereich thermoplastischer Kunststoffe, wie etwa bei den Polyester- oder Polyurethan-Elastomeren, zu finden. Im Spritzguss sind aber auch andere Elastomere wie einige Gummi-Materialien zu verwenden. Gummis können auch im erhitzten Zustand in eine Form gepresst werden, um ein Kissen mit einer Kammerstruktur zu erhalten und dabei auch Teile der Stützplatte beim Formgebungsvorgang zur Verankerung einzubetten.

Die Materialien der ganz oder teilweise einzubettenden Stützplatte sind dabei nicht auf gegenüber dem Material des Kissens eng abzustimmende Materialien im Sinne einer stofflichen Verbindung beschränkt. Grundsätzlich und auch vorzugsweise ist das Material der Stützplatte insgesamt oder in kombinierten Teilen für sich nach den Anforderungen an eine höhere Festigkeit und Steifigkeit vorgebbar und setzt für eine Verbindung zum Material des Kissens weder ein Anschmelzen noch ein Ankleben voraus. Das Einbetten kann sich auf eine formschlüssige Verankerung beschränken.

In umkehrender Betrachtung kann das Material des Kissens auch unabhängig vom Material der Stützplatte ausgewählt werden, wobei auch ein Zweikomponenten-Spritzgussverfahren in Betracht kommt, um etwa mit einer festeren Komponente die Auflagefläche des Kissens zu stabilisieren und mit einer weicheren Komponente zur Stützplatte hin die Verformbarkeit des Kissens zu fördern.

Das Kissen hat üblicherweise eine überwiegend geschlossene Auflagefläche, die meist nur begrenzte Öffnungen aufweist, um etwa eine Staubabsaugung innerhalb der Auflagefläche durch Löcher im Arbeitsmittel und Kanäle im Kissen zu ermöglichen. Die Kammerstrukturen des Kissens erfordern von der Spritzguss- oder Formpresstechnik her zum Entformen offene Kammern, die dementsprechend nach oben hin frei und beim Formgebungsvorgang auch nicht durch die Stützplatte abgedeckt sein sollen.

In dieser Hinsicht kann die Stützplatte zwar grundsätzlich gitterartig ausgebildet sein, um die die Kammerstrukturen abformenden Teile des Spritzgusswerkzeugs in den für das Kissen vorgesehenen Innenbereich des Werkzeugs durchgreifen zu lassen und damit die Stützplatte insgesamt gleich anzubinden. Vorzugsweise wird jedoch eine oberseitig geschlossene Stützplatte vorgesehen, die den Schleifteller glatt und schmutzunanfällig abdeckt und ggf. auch eine einfache Einarbeitung von Kanälen für eine Saugluftführung durch das Kissen hindurch eröffnet. Hierzu kann die Stützplatte zweckmäßig mehrteilig ausgebildet sein mit zumindest einem im Spritzgussmaterial eingebetteten Teil und zumindest einem weiteren, die Kammerstrukturen des Spritzgussteils überdeckenden Teil. Diese Teile sind zur Fertigstellung des Schleiftellers erst nach dem Spritzgussvorgang fest miteinander zu verbinden.

Die Verbindung der Teile der Stützplatte untereinander kann grundsätzlich auf verschiedene Weise passend zu einer Großserienanfertigung schnell und einfach durchgeführt werden, beispielsweise durch Verrastungen oder sonstige formschlüssige Verbindungen. Vorzugsweise wird jedoch eine Schweißverbindung vorgesehen, wozu die Teile der Stützplatte zumindest in aneinandergrenzenden Bereichen aus einem festen, schweißfähigen Kunststoff bestehen. Bevorzugt ist ein harter, ggf. auch glasfaserverstärkter thermoplastischer Kunststoff, der - abgesehen von der Verschweißbarkeit - insbesondere auf die Aussteifungsfunktion der Stützplatte auszulegen ist. Für das Verschweißen stehen im Bereich der Serienfertigung verschiedene Schweißverfahren zur Verfügung. Insbesondere bietet sich eine Hochfrequenzverschweißung an.

Der Stützplatte kann schon im Wege einer Vorfertigung ein Antriebsanschluss aus Metall angeformt oder eingeformt sein, wobei die Stützplatte bzw. der den Antriebsanschluss aufnehmende Teil der Stützplatte in einem Spritzgussvorgang gefertigt sein kann und den Antriebsanschluss aus Metall in der Form des Spritzgusswerkzeugs durch An- bzw. Umspritzen aufnimmt.

In der Stützplatte sind bei Ausführungsformen des Schleiftellers mit einer Staubabsaugung Öffnungen vorzusehen, die anschlussseitig auf standardisierte geräteseitige Sauganschlüsse ausgerichtet sind und mit Saugkanälen in der Kammerstruktur des Kissens in Verbindung stehen. Die Saugkanäle sind bei Verwendung von Arbeitsmitteln so zu gestalten, dass die im Arbeitsmittel vorgegebenen Lochmuster erfasst werden.

Die Kammerstrukturen des Kissens können noch mit funktionell ausgerichteten Füllungen versehen sein. In dieser Hinsicht können wärmeleitende Füllungen eine Verteilung und Ableitung von Hitze von der Auflagefläche in das Kissen hinein und zur Oberseite bzw. zur Stützplatte hin übernehmen. Wärmeleitfähige Füllungen aus nicht formfesten flüssigen, pastösen oder körnigen Materialien können durch eine Deckplatte oder Deckfolie in die Kammerstrukturen eingeschlossen werden, wobei vorzugsweise eine Deckfolie aus dem Polymermaterial des Kissens oder aus einem damit verschweißbaren Material aufgelegt und mit der Oberfläche des Kissens verschweißt wird.

Weiterhin können Füllungen aus einem formhaltigen Material eingelegt werden und auch oberseitig über eine Tragplatte zu einem einstückigen Teil fest verbunden sein, womit sich eine Deckfolie erübrigt.

Anstelle oder neben wärmeleitfähigen Füllungen können schwingungs- oder schallabsorbierende Materialien in die Kammerstrukturen eingelagert werden. Beispielsweise kann geschäumtes Polyurethan mit einem vorgegebenen Übermaß zu einem Presssitz eingebracht und fixiert werden.

Die Erfindung wird weiterhin durch ein Verfahren nach dem Anspruch 11 gelöst, bei dem zur Herstellung eines Schleiftellers für Oberflächenbearbeitungen, insbesondere eines Schleiftellers der vorbetrachteten Art, ein elastisch verformbares Kissen aus ungeschäumtem Elastomer mit zumindest einseitig offenen und durch Zwischenwände begrenzten Kammerstrukturen hergestellt wird und eine Stützplatte aus einem festen Material erhält, die in zumindest zu einem Teil in eine Spritzguss- oder Pressform für das Kissen eingebracht und schon beim Formgebungsverfahren in das Kissen eingebettet wird. Dieses Verfahren ermöglicht es, einen Schleifteller anforderungsgerecht hinsichtlich der Robustheit in der Anwendung und des vielfach hohen Verschleißes bei der Benutzung, mit entsprechend hohen Stückzahlen "aus einem Guss" schnell und preiswert zu fertigen und dabei die unterschiedlichen Materialien für ein nachgiebiges, weichelastisches Kissen mit einer zur Befestigung eines Arbeitsmittels hinreichend festen Auflagefläche einerseits und mit einer oberseitigen Abstützung durch eine integrale Stützplatte zu schaffen.

Die im Spritzgussverfahren oder Formpressverfahren zur einfachen und schnellen Entformung oberseitig offen zu belassenen Kammerstrukturen können durch eine zunächst mehrteilige Stützplatte oberseitig abgeschlossen werden, wenn nur Teile der Stützplatte, die die Kammerstrukturen nicht abdecken, beim Formgebungsverfahren für das Kissen eingebettet werden und wenn zumindest ein die Kammerstrukturen überdeckendes Teil der Stützplatte durch Verschweißen mit den im Kissen verankerten Teilen der Stützplatte integral ergänzt wird. Die Stützplatte kann dabei insgesamt bzw. in den zusammenzuschweißenden Teilen vorgefertigt sein, wobei ein festes und steifes Kunststoffmaterial in Betracht kommt, das auch eine Faserverstärkung aufweisen kann und das bei der Vorfertigung auch vorzugsweise metallische Elemente zu einem Antriebsanschluss einbettet.

Ausführungsbeispiele der Erfindung sind in der Zeichnung dargestellt und werden nachfolgend näher beschrieben. In der Zeichnung zeigen:
- Fig. 1: Schrägansicht eines Schleiftellers in Explosionsdarstellung zusammen mit einem darunter angeordneten Schleifblatt,
- Fig. 2: Draufsicht auf den Schleifteller nach Fig. 1, teilweise schnittbildlich,
- Fig. 3: Schnitt nach Linie III-III in Fig. 2,
- Fig. 4: Unteransicht des Schleiftellers nach Fig. 1 bis Fig. 3,
- Fig. 5: vergrößertes schnittbildliches Detail V in Fig. 3,
- Fig. 6: Schrägansicht zu einer weiteren, gegenüber der Ausführungsform in Fig. 1 abgewandelten Ausführungsform in Explosionsdarstellung,
- Fig. 7: Schrägansicht einer zweiten abgewandelten Ausführungsform in Explosionsdarstellung,
- Fig. 8: Ansicht einer dritten abgewandelten Ausführungsform, in Explosionsdarstellung und
- Fig. 9: Schrägansicht der Ausführungsform nach Fig. 8 von unten, ebenfalls in Explosionsdarstellung.

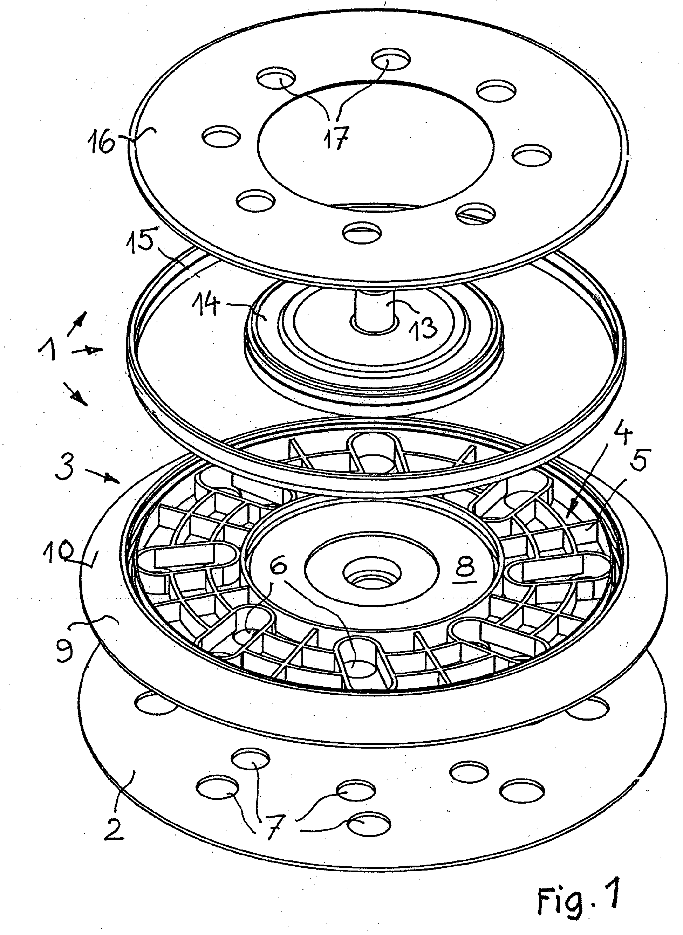

Ein in den Figuren 1 bis 5 insgesamt mit 1 bezeichneter und mit einem Schleifblatt 2 unterlegter Schleifteller ist erkennbar rotationssymmetrisch bezüglich einer gedachten Mittelachse ausgebildet. Dies ist eine verbreitete Ausführungsform, geeignet für rotierende Arbeitsmaschinen. Es versteht sich allerdings, dass Schleifteller der hier in Betracht zu ziehenden Art durchaus andere, nicht rotationssymmetrische Formen wie beispielsweise dreieckige oder rechteckige Grundflächen aufweisen und für andere, insbesondere auch marktgängige Arbeitsmaschinen mit rotierenden oder auch alternierenden, kreisenden oder sonstigen Arbeitsbewegungen mit Gestaltungen des Schleiftellers bestimmt sein können, die gegenüber dem dargestellten Ausführungsbeispiel lediglich als Anpassungen zu betrachten sind.

Ein Hauptbestandteil des Schleiftellers 1 ist ein Kissen 3 aus einem weichelastischen Polymer, z. B. einem Polyester-Elastomer oder Polyurethan-Elastomer, das im Spritzgussverfahren verarbeitet wird und in ein Spritzgusswerkzeug in kurzer Taktzeit einzubringen und nach raschem Erstarren auszubringen ist. Das Kissen 3 erhält dabei in einem für den Arbeitseinsatz besonders wichtigen und hinsichtlich einer Nachgiebigkeit wie aber auch hinsichtlich einer Druckausübung vorgegebenen Bereich eine Kammerstruktur 4 mit unterseitig großenteils geschlossenen Kammern und aufragenden Zwischenwänden 5 zu vorgebbarer vertikaler Druckbelastbarkeit und seitlicher Flexibilität, die nach oben hin offen sind. Dies ist für eine einfache Gestaltung des Spritzwerkzeugs notwendig oder zumindest zweckmäßig, um das Kissen 3 nach dem Spritzgussformgang ausbringen bzw. auswerfen zu können. Die Kammerstruktur ist unterseitig überwiegend geschlossen und nur in Form von Absaugöffnungen 6 durchbrochen, die im vorliegenden Fall mit Absaugöffnungen 7 des Schleifblatts 2 zur Deckung zu bringen sind.

Das Schleifblatt 2 ist im vorliegenden Fall haftend auf eine unterseitige Haftschicht des Kissens 3 aufzubringen. Die Befestigung eines regelmäßig nach Abnutzung zu ersetzenden Arbeitsmittels wie etwa des Schleifblatts 2 kann bei dem hier betrachteten Schleifteller 1 auf unterschiedliche Weise in der in der Praxis gebräuchlichen Vielfalt von Befestigungsformen erfolgen. So kann die Unterseite des Kissens 3 mit einem Haftkleber oder einem Verhakungsbelag (Klettbelag) zur Anbringung von Schleifblättern mit einer daran haftenden Oberfläche versehen werden. Ebenso sind hier Klemmsysteme einsetzbar, die ein Schleifblatt etwa in einem zentralen Bereich 7 des Schleiftellers schraubend einzuklemmen erlauben. Ein Schleifteller dieser Art kann auch unter Verzicht auf eine Haftunterfläche unterseitig direkt mit einer Arbeitsmittelschicht versehen werden, nach deren Abnutzung der Schleiftellers als Ganzes auszutauschen ist.

Ein konzentrisch innerhalb der Kammerstruktur 4 liegender Bereich 8 des Schleiftellers 3, der bei rotierenden Arbeitsbewegungen wie Schleifen, Polieren oder dergleichen mit einem üblicherweise leicht schräg angesetzten Schleifteller am Rande des Arbeitsbereichs liegt, nimmt insbesondere im oberen Bereich Bauelemente für einen nachfolgend noch zu betrachtenden Antriebsanschluss auf und ist in einem unteren Teil noch kammerartig mit nach unten hin offenen Kammern nachgiebig strukturiert, wobei diese Strukturierung auch dazu dient, spritzgusstechnisch unvorteilhafte Materialmassierungen zu vermeiden.

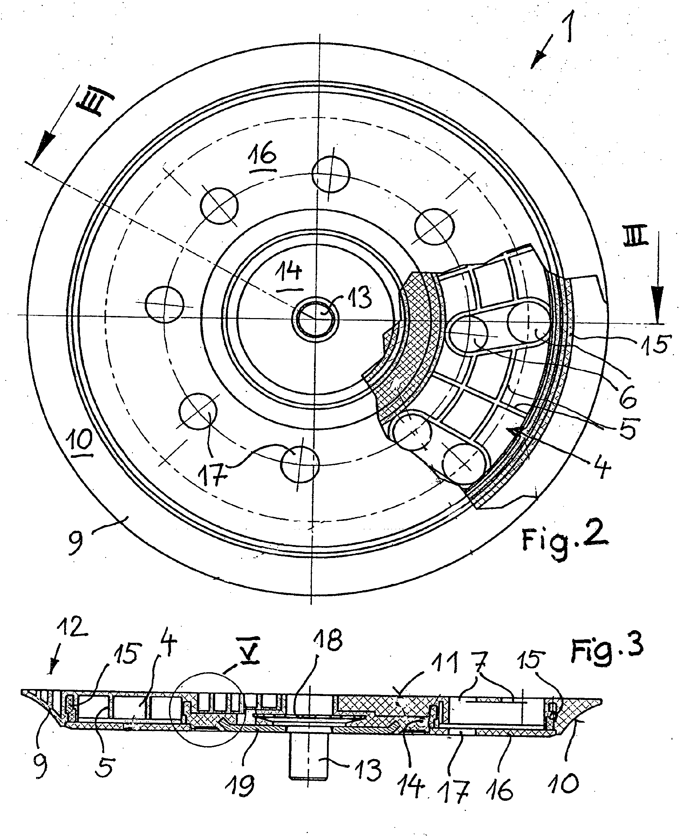

Ein den Ringbereich der Kammerstrukturen 4 konzentrisch umgebender Rand 9, der sich mit einer geschlossenen Oberseite 10 auf die Höhe einer planebenen Unterseite 11 (siehe Fig. 3) des Schleiftellers absenkt, ist gleichfalls mit nach unten offenen Kammerstrukturen 12 nachgiebig gestaltet, so dass bei einer Oberflächenbearbeitung mit schräg aufgesetztem Schleifteller Kantenbelastungen vermieden werden.

Der Schleifteller 1 wird im vorliegenden Beispiel rein rotierend betrieben und zwar über einen Antriebsanschluss 13, der im vorliegenden Fall als Zapfen in das Spannfutter einer Bohrmaschine oder eines entsprechenden Antriebs einzusetzen ist. Die Konzentration der rotatorischen Antriebskräfte erfordern eine belastbare Struktur zur Kraftüberleitung vom Antriebsanschluss 13 in das weichelastisch ausgelegte Kissen 4. Hierzu dient eine zunächst mehrteilige und dann zusammenzufügende Stützplatte aus einem Innenteil 14 und einem Außenteil 15, die zwischen sich die Kammerstruktur 4 von oben her frei lassen, mit zum Kissen 3 hin vorspringenden Bereichen ihrer Kreisscheiben- bzw. Ringform in das Kissen eingreifen und die oberseitig über ein Deckelteil 16 zu einer starren Einheit als Stützplatte zu verbinden sind.

In der Explosionsdarstellung nach Fig. 1 sind die Teile 14, 15 und 16 der Stützplatte noch getrennt dargestellt. Diese Teile sind ihrerseits schon in einem Spritzgussvorgang vorgefertigt und zwar aus einem harten, glasfaserverstärkten Kunststoff, der nicht auf eine materialschlüssige Verbindung mit dem Kunststoff des Kissens 3 ausgewählt zu werden braucht. Vielmehr bedarf es nur einer formschlüssigen Verankerung oder einer Verklebung mit dem Kunststoffwerkstoff des Kissens, um eine gewünschte Verbindung zwischen dem Kissen 3 und den Teilen 14, 15 der Stützplatte herzustellen. Diese Teile werden nämlich vorab in der vorgegebenen Position in die Form des Spritzgusswerkzeugs für das Kissen 3 eingebracht und durch den nachfolgenden Spritzgussvorgang für das Kissen 3 eingebettet, so dass sie umfassende Krafteinleitungen in das Kissen 3 ermöglichen.

Dabei greift das innere Teil 14 mit einem axial nach unten hin vorstehenden Verankerungsbereich innerhalb eines inneren Randes der Kammerstruktur 4 und das Teil 15 an der Außenseite der Kammerstruktur 4 in das Kissen ein. Die Kammerstruktur 4 wird dabei allerdings nicht nach oben hin abgedeckt, so dass Formelemente des Spritzgusswerkzeugs von oben hin in die Form eingreifen können und auch nach oben hin herausbewegbar sind, um dann den Ausstoß des Kissens 3 mit den Stützplattenteilen 14 und 15 zu ermöglichen.

Eine ganzheitliche Verbindung der Teile 14 und 15 untereinander und mit dem Antriebsanschluss 13 wird erst nach dem Spritzgussvorgang mit Hilfe des Deckelteils 16 hergestellt, welches eine in sich starre Stützplatte schafft, die Oberseite des Schleiftellers glattflächig und damit schmutzunanfällig abdeckt und auch Luftleitkammern im Kissen 3 zwischen unterseitigen Absaugöffnungen 6 und oberseitigen Luftdurchlässen 17 ausbildet, die im Deckelteil 16 als Lochkreis ausgebildet sind.

Das zunächst lose Deckelteil 16 wird mit frei aus der einbettenden Kunststoffmasse des Kissens zutage liegenden Ringbereichen der Teile 14 und 15 randseitig verschweißt. Für das Verschweißen kommen verschiedene Kunststoffschweißverfahren in Betracht, etwa auch ein Reibschweißen wie das Ultraschallverschweißen, bevorzugt wird jedoch ein dielektrisches Hochfrequenzschweißen vorgesehen, um die innenliegenden Grenzflächen der Teile der Stützplatte verlässlich miteinander zu verbinden.

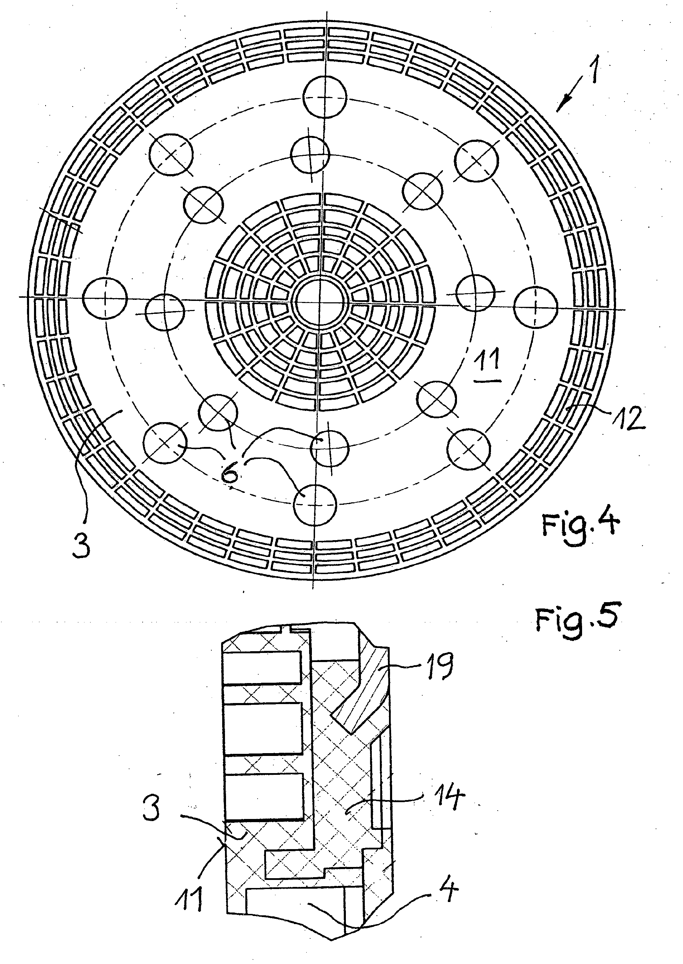

In Bezug auf die Staubabsaugung ist durch ein Arbeitsmittel, hier durch das Schleifblatt 2, ein standardisiertes Lochmuster mit Löchern 7 gegeben, welches durch die Löcher 6 in der Unterfläche des Kissens 3 bei einer deckungsgleichen Ausbildung oder einer allesamt umfassenden, ggf. auch größeren Ausbildung vollständig benutzt werden kann. Bei geringerem Absaugbedarf können auch schon von dem Kissen 3 her durch Verzicht auf Löcher 6 Teilnutzungen der Absauglöcher 7 vorgesehen werden. Wie insbesondere aus Fig. 4 ersichtlich ist, weist die Unterseite 11 des Kissens 3 Löcher 6 auf, die auf zwei konzentrischen Lochkreisen unterschiedlichen Durchmessers zu je acht Löchern gleichmäßig auf dem Kreisumfang verteilt sind und paarweise mit einem weiter innen und einem weiter außen gelegenen Loch auf leicht divergierenden Radiallinien liegen. Solche Lochpaare sind, wie aus Fig. 1 und Fig. 2 zu ersehen, jeweils mit einer Kammer der Kammerstruktur 4 und oberseitig mit einem der Löcher 17 verbunden. Die Löcher 17 werden von einer (nicht dargestellten) Glocke oder dgl. Saugquelle des Antriebs übergriffen und mit Saugluft beaufschlagt, wenn der Schleifteller an einer mit einer Absaugeinrichtung versehenes Antriebsgerät angeschlossen wird. Dabei versteht es sich, dass die gewünschte Durchgangsverbindung zwischen den Sauglöchern 6, deren Lage vom Arbeitsmittel her bestimmt wird und den Sauglöchern 17, die zumindest hinsichtlich ihres Durchmessers durch antriebsseitige Vorrichtungen bestimmt werden, mit der Gestaltung der Kammerstruktur 4 im Kissen 3 einzurichten ist.

Wie die Querschnittszeichnungen nach Fig. 3 und insbesondere das vergrößerte Detail nach Fig. 5 zeigen, ist das innere Teil 14 der Stützplatte mit dem Antriebsanschluss 13 bereits in einem Werkstoffverbund gefertigt, wobei der Antriebsanschluss 13 mit einem darunter liegenden Verankerungsteller 18 und einer darüber liegenden Verankerungsschale 19 aus Metall bestehen und ihrerseits durch An- und Umspritzen bei der Vorfertigung des Teils 14 im Zuge eines Kunststoff-Spritzgussvorgangs eingebettet und damit verankert worden sind. Dies schafft in einem schnellen und einfachen Arbeitsgang auch zwischen dem hochfest ausgewählten Kunststoffmaterial und dem in der Regel noch fester vorgebbaren Metall des Antriebsanschlusses 13 und seiner Verankerungen eine solide, einstückige Verbindung.

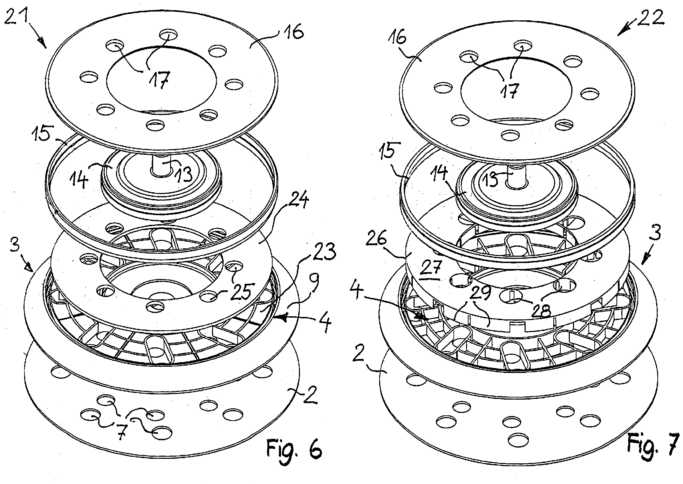

Zwei gegenüber der vorstehend betrachteten Ausführungsform des Schleiftellers abgewandelte Schleifteller 21 nach Fig. 6 bzw. 22 nach Fig. 7 übernehmen die in den Explosionsdarstellungen vereinzelt dargestellten Elemente der Ausführungsform gemäß Fig. 1, die weiterhin mit den ursprünglichen Bezugszahlen gekennzeichnet sind, und unterscheiden sich durch hinzugefügte Bauteile. Insofern kann auch auf die oben stehende Beschreibung der ersten Ausführungsform zurückgegriffen werden.

Der Schleifteller 21 nach Fig. 6 sieht eine Füllung der Kammerstruktur 4 mit einem wärmeleitenden Fluidmaterial vor, welches vorteilhaft zur Wärmeableitung und damit vom Schleifblatt 2 nach oben und außen zum Überhitzungsschutz gegenüber der Reibungswärme eingebracht werden kann. Um ein nicht formfestes Material - ähnliches würde auch für feinkörnige Füllungen 23 etwa von Metallpulver gelten - in den jeweils Kammern, die nicht als Kanäle für die Luftabsaugung dienen, zu halten, werden die Kammer durch eine Abdeckung 24 verschlossen werden, die als plane Folie in Ringform aus einem zu dem Material des Kissens 3 kompatiblen Material, im einfachsten Fall aus dem gleichen Material, besteht und mit den Oberkanten der Zwischenwände der Kammern jeweils durchgehend verschweißt wird. Die Ringform der Folie wird im Innendurchmesser und Außendurchmesser so geschnitten, dass sie die Kammerstruktur abdeckt aber die Teile 14, 15 der Stützplatte nicht übergreift, sondern nur den Zwischenraum bestreicht. Überdies sind Löcher 25 in den Ring eingearbeitet, die mit den Löchern 17 des Deckelteils 16 der Stützplatte deckungsgleich gesetzt werden, um die Saugluftführung nicht zu beeinträchtigen. Mit der Einbettung der Teile 14 und 15 der Stützplatte beim Spritzgussvorgang in das Kissen 3 und mit dem Aufschweißen des Deckelteils 16 der Stützplatte entsteht im Bereich der Kammerstruktur 4 eine wärmeleitfähige Platte zur Abfuhr der Arbeitswärme.

Für den gleichen Zweck einer Wärmeableitung aber auch für Zwecke der Schwingungs- oder Schalldämmung kommen auch formhaltige Füllungen für die Kammerstruktur 4 in Betracht. Diese können allerdings ohne eine gesonderte und extra aufzuschweißende Abdeckfolie in die Kammerstrukturen eingesetzt werden und dort beispielsweise aufgrund eines vorgegebenen Presssitzes spielfrei gehalten sein. Besonders vorteilhaft in dieser Hinsicht ist bei dem Schleifteller 22 nach Fig. 7 ein einziger zusammenhängender Scheibenkörper 26 aus Füllmaterial, beispielsweise aus geschäumten Polyurethan, der der Schwingungs- und Schallabsorption dient und der von einer oberen durchgehenden Decke 27, die lediglich Löcher 28 für die Saugluftführung umfasst, unterseitige Füllfortsätze 29 aufweist, die alle jene Kammerstrukturen ausfüllt, die nicht zur Saugluftführung offen bleiben sollen. Auch diese Scheibe hat die Umrisse eines Ringkörpers, der sich überschneidungsfrei zwischen die Teile 14 und 15 der Stützplatte zwischenfügt.

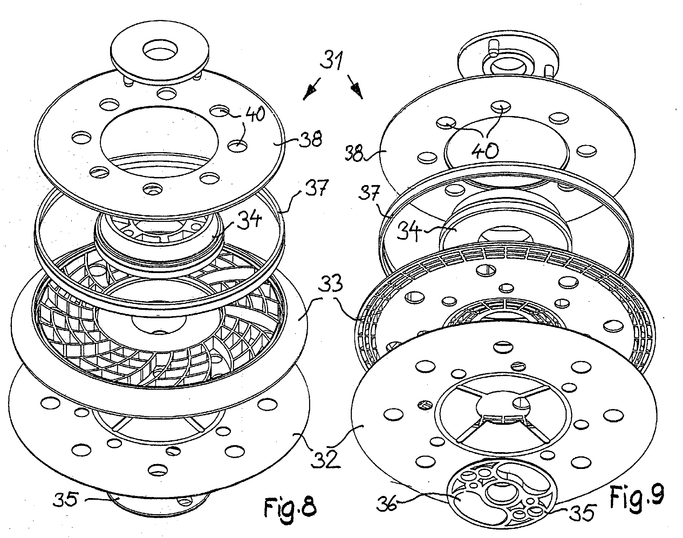

Ein weiterer Schleifteller 31 ist in Fig. 8 und 9 in zwei Explosionsdarstellungen schräg von oben bzw. schräg von unten dargestellt, und zwar in Verbindung mit einem unterseitig angebrachten Schleifblatt 32, welches nicht über eine Haftschicht oder Haftmittel mit einem Kissen 33 verbunden wird sondern in einem mittleren, eingesenkten Bereich durch eine flachköpfige Klemmschraube 35 mit Fingerausnehmungen 36 festzuklemmen ist. Die Verschraubung gegenüber einem Teil 34 der Stützplatte greift in deren metallische Einsätze ein, die oberseitig auch mit einem Antriebsanschluss 36 zu verbinden sind. Die Konstruktion des Schleiftellers mit in das Kissen 33 als Spritzgussprodukt einzubettenden Teilen 34 und 37 einer Stützplatte, die durch ein Deckelteil 38 durch ein Verschweißen vervollständigt wird, entspricht der Ausführungsform der oben beschriebenen Schleifteller 1, 21 und 22.

Die Fig. 8 zeigt auch eine andere von vielfältig zu gestaltenden Kammerstrukturen 39 mit leicht spiralförmig nach außen verlaufenden bzw. konzentrisch zueinander verlaufenden Zwischenwänden. Die der Saugluftführung dienenden Kammern sind hier auch mit Rücksicht auf das besondere Lochmuster des Schleifblatts 32 bogenförmig geformt und oberseitig auf Löcher 40 des Deckelteils 38 ausgerichtet.

Es versteht sich grundsätzlich, dass die Saugluftführung mitsamt den entsprechenden Öffnungen, von der Unterseite des Kissens zur Oberseite des Deckelteils durchgängig gestaltet, bei Schleiftellern entbehrlich ist, in denen eine Staubabsaugung nicht nötig oder nicht möglich oder aus sonstigen Gründen nicht vorgesehen ist.

## Patentansprüche

1. Schleifteller (1,21,22,31) für Oberflächenfeinbearbeitungen mit einem Schleifblatt (2,32) oder dergleichen Arbeitsmittel, das unterseitig an einer überwiegend geschlossenen Auflagefläche (11) eines elastisch verformbaren Kissens (3) anzubringen ist, wobei das Kissen (3) aus einem Spritzgussteil aus ungeschäumtem elastomeren thermoplastischem Kunststoff mit zumindest einseitig offenen und durch Zwischenwände begrenzten Kammerstrukturen (4) besteht, wobei das Kissen (3) auf der der Auflagefläche (11) gegenüberliegenden Seite durch eine mit einem Antriebsanschluss (13) verbundene Stützplatte (14,15,16) aus einem festen Material abgestützt ist, **dadurch gekennzeichnet, dass** die Stützplatte (14,15,16) eine oberseitig im Wesentlichen geschlossene Abdeckung der nach oben offenen Kammerstrukturen (4) des Kissens (3) bildet mit in das Kissen hineinragenden Verankerungsvorsprüngen im Kissen (3) eingebettet ist.

2. Schleifteller (1,21,22,31) nach Anspruch 1, **dadurch gekennzeichnet, dass** die Stützplatte (14,15,16) mehrteilig ausgebildet ist mit zumindest einem im Spritzgussteil eingebetteten Teil (14,15) und zumindest einem weiteren, die Kammerstrukturen (4) des Spritzgussteils überdeckenden Teil (16), wobei die Teile (14,15,16) fest miteinander verbunden sind.

3. Schleifteller (1,21,22,31) nach Anspruch 2, **dadurch gekennzeichnet, dass** die Teile (14,15,16) der Stützplatte zumindest in aneinandergrenzenden Bereichen aus einem festen Kunststoff bestehen und die miteinander verschweißt sind.

4. Schleifteller (1,21,22,31) nach Anspruch 2 oder 3, **dadurch gekennzeichnet, dass** zumindest ein in das Kissen (3) eingebettetes Teil (15) als Ring ausgebildet ist.

5. Schleifteler (1,21,22,31) nach einem der Ansprüche 2 bis 4, **dadurch gekennzeichnet, dass** eines der Teile (14) der Stützplatte mit einem Antriebsanschluss (13) aus Metall einstückig ausgebildet ist.

6. Schleifteller (1,21,22,31) nach einem der Ansprüche 1 bis 5, **dadurch gekennzeichnet, dass** innerhalb der Kammerstrukturen (4) zweiseitig offene Kammern als Luftleitkammern für eine Saugluftführung ausgebildet und auf vorgegebene Lochmuster (7) von Arbeitsmitteln ausgerichtet sind.

7. Schleifteller (1,21,22,23) nach Anspruch 6, **dadurch gekennzeichnet, dass** die Stützplatte (14,15,16) die Luftkammern abdeckt und mit Öffnungen (17) versehen ist, die auf geräteseitige Sauganschlüsse ausgerichtet sind.

8. Schleifteller (21,22) nach einem der Ansprüche 1 bis 7, **dadurch gekennzeichnet, dass** die Kammerstrukturen (4) zumindest teilweise mit Füllungen (23) aus wärmeleitenden, schwingungs- und/oder schalldämmenden Materialien versehen sind.

9. Schleifteller (21) nach Anspruch8, **dadurch gekennzeichnet, dass** die Füllungen (23) in den Kammerstrukturen (4) mit einer Abdeckfolie (24) eingeschlossen sind.

10. Schleifteller (22) nach Anspruch 8, **dadurch gekennzeichnet, dass** die Füllungen einen die Kammerstrukturen (4) übergreifenden zusammenhängenden Füllkörper (27) bilden.

11. Verfahren zur Herstellung eines Schleiftellers (1,21,22,23) für Oberflächenbearbeitungen mit einem Schleifblatt (2,32) oder dergleichen Arbeitsmittel, insbesondere nach einem der Ansprüche 1 bis 10, wobei ein elastisch verformbares Kissen (3) aus ungeschäumten elastromeren Kunststoff mit zumindest einseitig offenen und durch Zwischenwände (5) begrenzten Kammerstrukturen (4) im Spritzgussverfahren hergestellt wird, **dadurch gekennzeichnet, dass** vor dem Spritzguss ein Teil (14, 15) einer Stützplatte (14,15,16) aus einem festen Material in eine Spritzgussform für das Kissen (3) eingebracht und beim Spritzgussverfahren in das Kissen (3) eingebettet und danach mit zumindest einem weiteren Teil (16) der Stützplatte zu einer im Wesentlichen geschlossenen Abdeckung der oben offenen Kammerstrukturen (4) des Kissens (3) verbunden wird.

12. Verfahren nach Anspruch 11, **dadurch gekennzeichnet, dass** die in mehreren Teilen (14,15,16)vorgefertigte Stützplatte mit zumindest einem Teil (14,15) im Spritzgussverfahren in das Kissen (3) eingebettet und danach durch Verschweißen der Teile (14,15,16) zur Stützplatte vereinigt wird.

13. Verfahren nach Anspruch 12, **dadurch gekennzeichnet, dass** das Verschweißen als Hochfrequenzschweißen durchgeführt wird.

14. Verfahren nach Anspruch 12, **dadurch gekennzeichnet, dass** das Verschweißen durch Reibschweißen erfolgt.

15. Verfahren nach Anspruch 12, **dadurch gekennzeichnet, dass** das Verschweißen durch Ultraschallverschweißen erfolgt.

## Claims

1. Grinding disc (1, 21, 22, 31) for fine machining of surfaces, comprising a grinding sheet (2, 32) or similar work tools to be attached on the underside thereof to a predominantly closed contact surface (11) of an elastically deformable pad (3), the pad (3) consisting of an injection-moulded part made of unfoamed elastomeric thermoplastic material and having chamber structures (4) that are open on at least one side and delimited by intermediate walls, the pad being supported on the opposite side to the contact surface (11) by a support plate (14, 15, 16) made of a solid material and connected to a drive connection (13), **characterised in that** the support plate (14, 15, 16) forms a cover, which is substantially closed on the top side, for the upwardly open chamber structures (4) of the pad (3) and is embedded in the pad (3) by means of anchoring projections that protrude into the pad.

2. Grinding disc (1, 21, 22, 31) according to claim 1, **characterised in that** the support plate (14, 15, 16) is formed in multiple parts and comprises at least one part (14, 15) that is embedded in the injection-moulded part and at least one further part (16) that covers the chamber structures (4) of the injection-moulded part, said parts (14, 15, 16) being rigidly interconnected.

3. Grinding disc (1, 21, 22, 31) according to claim 2, **characterised in that** the parts (14, 15, 16) of the support plate consist, at least in adjoining regions, of a solid plastics material and are welded together.

4. Grinding disc (1, 21, 22, 31) according to either claim 2 or claim 3, **characterised in that** at least one part embedded in the pad (3) is a ring.

5. Grinding disc (1, 21, 22, 31) according to any of claims 2 to 4, **characterised in that** one of the parts (14) of the support plate is integrally formed with a drive connection (13) made of metal.

6. Grinding disc (1, 21, 22, 31) according to any of claims 1 to 5, **characterised in that** chambers inside the chamber structures (4) that are open on two sides are designed as air conduction chambers for guiding suction air and are oriented to match predetermined hole patterns (7) of work tools.

7. Grinding disc (1, 21, 22, 23) according to claim 6, **characterised in that** the support plate (14, 15, 16) covers the air chambers and is provided with openings (17) that are oriented to match device-side suction connections.

8. Grinding disc (21, 22) according to any of claims 1 to 7, **characterised in that** the chamber structures (4) are provided, at least in part, with fillings (23) made of heat-conducting, vibration-damping and/or noise-damping materials.

9. Grinding disc (21) according to claim 8, **characterised in that** the fillings (23) in the chamber structures (4) are enclosed by a cover film (24).

10. Grinding disc (22) according to claim 8, **characterised in that** the fillings form a contiguous filler body (27) that extends across the chamber structures (4).

11. Method for producing a grinding disc (1, 21, 22, 23) for fine machining of surfaces, said disc comprising a grinding sheet (2, 32) or similar work tools, in particular according to any of claims 1 to 10, an elastically deformable pad (3) made of unfoamed elastomeric plastics material and having chamber structures (4) that are open on at least one side and delimited by intermediate walls (5) being manufactured by injection moulding, **characterised in that**, prior to injection moulding, a part (14, 15) of a support plate (14, 15, 16) made of a solid material is introduced into an injection mould for the pad (3) and embedded in the pad (3) during the injection moulding process and subsequently connected to at least one further part (16) of the support plate so as to form a substantially closed cover for the chamber structures (4) of the pad (3) that are open at the top.

12. Method according to claim 11, **characterised in that** the support plate manufactured in multiple parts (14, 15, 16) is embedded in the pad (3) in the injection moulding process by at least one part (14, 15) and subsequently the parts (14, 15, 16) are fused together by means of welding so as to form the support plate.

13. Method according to claim 12, **characterised in that** the welding is performed by high-frequency welding.

14. Method according to claim 12, **characterised in that** the welding is performed by friction welding.

15. Method according to claim 12, **characterised in that** the welding is performed by ultrasonic welding.

## Revendications

1. Disque de meulage (1, 21, 22, 31), destiné à des processus d'usinage fin de surface, comprenant une lame abrasive (2, 32) ou un moyen de travail analogue, qui est destinée à être montée du côté inférieur sur une surface de support (11) essentiellement fermée d'un coussin (3) déformable élastiquement, le coussin (3) étant constitué d'un élément moulé par injection en matière thermoplastique élastomère non-alvéolaire comportant des structures compartimentées (4) ouvertes sur au moins un côté et délimitées par de parois intermédiaires, le coussin (3) étant supporté, du côté opposé à la surface de support (11), par une plaque de support (14, 15, 16) en matière dure reliée à un raccord d'entraînement (13), **caractérisé en ce que** la plaque de support (14, 15, 16) forme un recouvrement sensiblement fermé du côté supérieur des structures compartimentées (4), ouvertes en haut, du coussin (3) et est incorporée dans le coussin avec des projections d'ancrage faisant saillie dans le coussin.

2. Disque de meulage (1, 21, 22, 31) selon la revendication 1, **caractérisé en ce que** la plaque de support (14, 15, 16) est constituée de plusieurs parties dont au moins une partie (14, 15) est incorporée dans l'élément moulé par injection et au moins une autre partie (16) recouvre les structures compartimentées (4) de l'élément moulé par injection, les parties (14, 15, 16) étant reliées solidairement entre elles.

3. Disque de meulage (1, 21, 22, 31) selon la revendication 2, **caractérisé en ce que** les parties (14, 15, 16) de la plaque de support sont constituées, au moins dans des zones adjacentes, d'une matière synthétique dure et sont soudées entre elles.

4. Disque de meulage (1, 21, 22, 31) selon la revendication 2 ou 3, **caractérisé en ce qu'**au moins une partie (15), incorporée dans le coussin, est a une conformation annulaire.

5. Disque de meulage (1, 21, 22, 31) selon l'une des revendications 2 à 4, **caractérisé en ce que** l'une des parties (14) de la plaque de support est réalisée d'une seule pièce avec un raccord d'entraînement (13) en métal.

6. Disque de meulage (1, 21, 22, 31) selon l'une des revendications 1 à 5, **caractérisé en ce que** les structures compartimentées (4) contiennent des compartiments, ouverts des deux côtés, qui sont réalisés sous la forme de compartiments de guidage d'air destinés à guider de l'air d'aspiration et qui sont alignés sur des motifs de trous prédéterminés (7) de moyens de travail.

7. Disque de meulage (1, 21, 22, 23) selon la revendication 6, **caractérisé en ce que** la plaque de support (14, 15, 16) recouvre les compartiments d'air et est pourvue d'orifices (17) qui sont alignés sur des raccords d'aspiration côté appareil.

8. Disque de meulage (21, 22) selon l'une des revendications 1 à 7, **caractérisé en ce que** les structures compartimentés (4) sont munies au moins en partie de matières de remplissage (23) de conduction de chaleur, d'amortissement de vibrations et/ou d'isolation phonique.

9. Disque de meulage (21) selon la revendication 8, **caractérisé en ce que** les matières de remplissage (23) sont enfermées dans les structures compartimentées (4) avec un film de recouvrement (24).

10. Disque de meulage (22) selon la revendication 8, **caractérisé en ce que** les matières de remplissage forme un corps de remplissage continu (27) s'engageant par-dessus les structures compartimentées (4).

11. Procédé de fabrication d'un disque de meulage (1, 21, 22, 23), destiné à des processus d'usinage fin de surface, comprenant une lame abrasive (2, 32) ou un moyen de travail analogue, en particulier selon l'une des revendications 1 à 10, un coussin (3) déformable élastiquement en en matière élastomère non-alvéolaire comportant des structures compartimentées (4) ouvertes sur au moins un côté et délimitées par des parois intermédiaires (5) étant produit par moulage par injection, **caractérisé en ce que**, avant le moulage par injection, une partie (14, 15) d'une plaque de support (14, 15, 16) en matière dure est introduite dans un moule de moulage par injection destiné au coussin (3) et est incorporée dans le coussin (3) lors du moulage par injection, puis est reliée à au moins une autre partie (16) de la plaque de support pour former un recouvrement sensiblement fermé des structures compartimentées (4), ouvertes en haut, du coussin (3).

12. Procédé selon la revendication 11, **caractérisé en ce que** la plaque de support, préfabriquée en plusieurs parties (14, 15, 16), comprenant au moins une partie (14, 15), est incorporée dans le coussin (3) lors du procédé de moulage par injection, puis est unie à la plaque de support par soudage des parties (14, 15, 16).

13. Procédé selon la revendication 12, **caractérisé en ce que** le soudage est un soudage à haute fréquence.

14. Procédé selon la revendication 12, **caractérisé en ce que** le soudage est un soudage par friction.

15. Procédé selon la revendication 12, **caractérisé en ce que** le soudage est un soudage par ultrasons.
